# EUROPEAN PATENT APPLICATION

(11) **EP 3 783 418 A2**
(43) Date of publication of application: **24.02.2021**
(21) Application number: 20185795.0
(22) Date of filing: 14.07.2020
(51) Int. Cl.: G02B 27/00, G02B 27/01

(54) **DISPLAY DEVICE**

(30) Priority: 22.08.2019 US 201962890591 P
(71) Applicant: HTC Corporation, Taoyuan City 330, (TW)
(72) Inventor: TSAI, Cheng-Hsiu, 330 Taoyuan City (TW); CHANG, Wei Jen, 330 Taoyuan City (TW); SHIH, Bao-Jen, 330 Taoyuan City (TW); FAN, Fu-Cheng, 330 Taoyuan City (TW)
(74) Representative: Emde, Eric

(57) **Abstract**

A display device includes a display, an image beam shifter, and a light guiding component. The display generates an image beam. The image beam shifter receives the image beam and generates a projected image beam. The light guiding component receives the projected image beam to transport the projected image beam to different positions of a target zone in sequence. The image beam shifter projects the projected image beam to different positions of the light guiding component with time division.

## Description

### CROSS-REFERENCE TO RELATED APPLICATION

This application claims the priority benefit of U.S. provisional application serial no. 62/890,591, filed on August 22, 2019.

### BACKGROUND OF THE DISCLOSURE

### 1. Field of the Disclosure

The disclosure relates to a display device, and in particular, to a display device capable of providing a virtual reality image, an augmented reality image, or a mixed reality image.

### 2. Description of Related Art

With the progress of electronic technologies, it has become an important trend within the field of electronic products to provide a high-quality display device with a compact size. Therefore, a wearable display device capable of providing a virtual reality image, an augmented reality image, or a mixed reality image is developed accordingly.

For the requirements of the wearable display device, the pursuit of a compact module and high resolution can provide better user experience. However, increasing the resolution of the display screen typically results in the price, size, and weight of the display device correspondingly increasing. With the increase in the size and weight of the display device, it is inconvenient for a user to carry it. The increase in the price of the display device may reduce consumers' willingness to buy.

### SUMMARY OF THE DISCLOSURE

The disclosure is directed to a variety of display devices, which can reduce the size of a wearable display device.

A display device according to the present invention includes a display, an image beam shifter, and a light guiding component. The display generates an image beam. The image beam shifter receives the image beam and generates a projected image beam. The light guiding component receives the projected image beam to transport the projected image beam to different positions of a target zone in sequence. The image beam shifter projects the projected image beams to different positions of the light guiding component with time division.

Another display device according to the present invention includes a display, an image beam shifter, and a light guiding component. The display generates an image beam. The image beam shifter receives the image beam and generates a first projected image beam and a second projected image beam. The light guiding component receives the first projected image beam and the second projected image beam, and transports the first projected image beam to a first target zone and the second projected image beam to a second target zone, where the first target zone is different from the second target zone.

Based on the above, in embodiments of the invention, projected image beams can be transmitted to different target zone positions at the same time, or with time division, using an image beam shifter. In this way, the area of the display used to generate the image which is viewed by the user can be effectively reduced, thereby reducing the size and weight of the wearable display device.

### BRIEF DESCRIPTION OF THE DRAWINGS

FIG. 1 is a schematic diagram of a display device according to an embodiment of the disclosure.
FIG. 2 is a schematic diagram of an implementation of a display device according to an embodiment of the disclosure.
FIG. 3 is a schematic diagram of another implementation of a display device according to an embodiment of the disclosure.
FIG. 4 is a schematic action diagram of a display device according to an embodiment of the disclosure.
FIG. 5 is a schematic diagram of a display device according to another embodiment of the disclosure.
FIG. 6 is a schematic diagram of a display device according to another embodiment of the disclosure.

### DESCRIPTION OF THE EMBODIMENTS

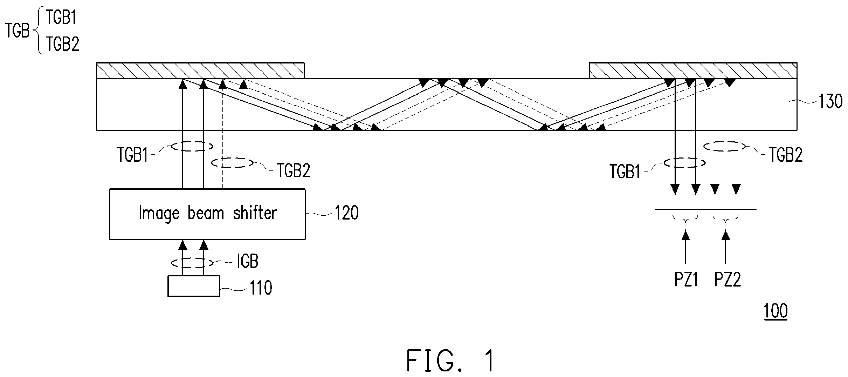

FIG. 1 is a schematic diagram of a display device according to an embodiment of the invention. The display device 100 includes a display 110, an image beam shifter 120, and a light guiding component 130. The display 110 is configured to generate an image beam IGB. The image beam shifter 120 is optically coupled with the display 110, and receives the image beam IGB generated by the display 110. The image beam shifter 120 generates a projected image beam TGB by modifying the image beam IGB as will be described in more detail below. In the present embodiment, the projected image beam TGB generated by the image beam shifter 120 at a first moment in time can be represented by projected image beam TGB1 and at a second moment in time can be represented by projected image beam TGB2.The image beam shifter 120 transmits the projected image beams TGB1 and TGB2 to the light guiding component 130 in different time intervals respectively and TGB2 could in fact be generated and transmitted before TGB1 depending on how the image beam shifter 120 is controlled.

The image beam shifter 120 enables the position where the projected image beam TGB1 is emitted from the image beam shifter 120 in a first time interval to be different from a position where the projected image beam TGB2 is emitted from the image beam shifter 120 in a second time interval.

The light guiding component 130 is optically coupled to the image beam shifter 120 and is configured to receive the projected image beams TGB1 and TGB2as they are projected from the image beam shifter 120. The operation of the image beam shifter 120 causes the projected image beams emitted therefrom to be incident upon the light guiding component 130 at different positions thereon. Thus the light guiding component 130 transports each of the projected image beams TGB1 and TGB2 respectively through the light guiding component 130, and projects them to a first partition PZ1 and a second partition PZ2, respectively, at different respective positions within a target zone TZ. The light guiding component 130 may be a waveguide, a freeform lens, a half-mirror, and other common optical components used to guide light..

In one embodiment of the invention, the image beam IGB generated by the display 110 in the first time interval may correspond to a first display picture, and the image beam IGB generated by the display 110 in the second time interval may correspond to a second display picture, where the first display picture is different from the second display picture. In this way, the image beam shifter 120 can be controlled to cause the display pictures formed in the target zone TZ by each image beam IGB to be located adjacent to one another other. If the time interval between transmitting the first and second display pictures is shorter than the persistence of vision threshold then both display pictures will be perceived at the same time, adjacent to one another, by a viewer. That is, the size and/or the resolution of the display screen as perceived by a viewer of the target zone TZ, can be increased without increasing the size of the display 110, or, alternatively, the display 110 can be made smaller whilst maintaining the same display screen size and/or resolution as perceived by a viewer viewing the target zone TZ.

The display device 100 in the present embodiment may be a display device generating a virtual reality image, an augmented reality image, or a mixed reality image. The display device 100 may be any form of wearable display devices.

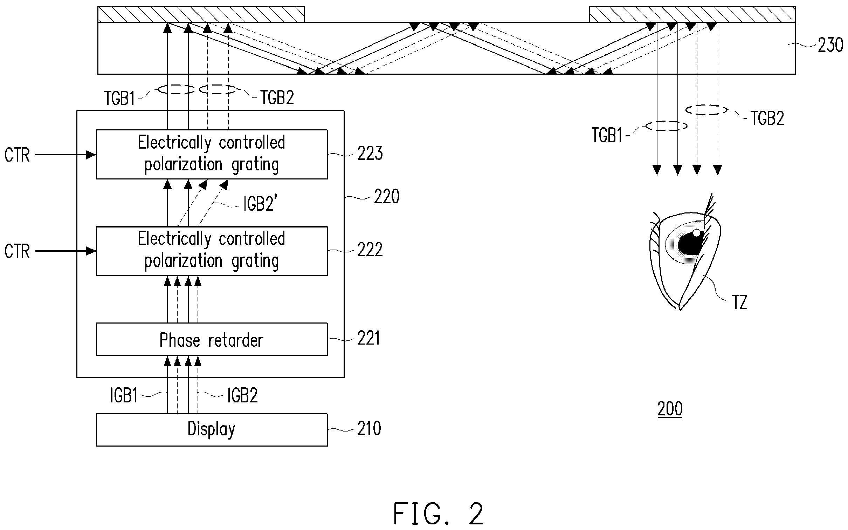

FIG. 2 is a schematic diagram of an implementation of a display device according to an embodiment of the present invention. Similar to Figure 1, the display device 200 includes a display 210, an image beam shifter 220, and a light guiding component 230. The image beam shifter 220 includes a phase retarder 221 and electrically controlled polarization gratings 222 and 223. The phase retarder 221 is optically coupled to the display 210, the electrically controlled polarization grating 222 is optically coupled to the phase retarder 221, and the electrically controlled polarization grating 223 is optically coupled to the electrically controlled polarization grating 222 such that light from the display 210 passes through the phase retarder 221, through electrically controlled polarization grating 222 and then through electrically controlled polarization grating 223 sequentially.

In the present implementation, the display 210 generates linearly polarized image beams IGB1 and IGB2 in a first time interval and in a second time interval, respectively. The phase retarder 221 of the image beam shifter 220 receives the image beams IGB1 and IGB2, and converts linearly polarized image beams IGB1 and IGB2 into circularly polarized image beams IGB1 and IGB2, respectively. In the present implementation, the phase retarder 221 may be a quarter wave plate.

The electrically controlled polarization gratings 222 and 223 may each receive an electrical control signal CTR which causes them each to deflect the received image beams IGB1 and IGB2 as they pass through where the deflection caused is in accordance with the control signal CTR. In the present implementation, for example, the electrically controlled polarization grating 222 may be controlled, via a signal CTR, to allow circularly polarized image beam IGB1 to pass through it in the first time interval with no deflection. The electrically controlled polarization grating 222 may be controlled, via a signal CTR, to deflect the circularly polarized image beam IGB2 at a first deflection angle to generate a deflected image beam IGB2' in the second time interval. The first deflection angle by which the incoming image beam is deflected by the electrically controlled polarization grating 222 is controlled by signal CTR. The electrically controlled polarization grating 223 may also be controlled, via a signal CTR, to allow the circularly polarized image beam IGB1 to pass through it with no deflection in the first time interval to generate a projected image beam TGB1. The electrically controlled polarization grating 223 may be controlled, via a signal CTR, to deflect the deflected image beam IGB2' at a second deflection angle to generate a projected image beam TGB2 in the second time interval. The second deflection angle by which the deflected image beam IGB2' is deflected by the electrically controlled polarization grating 223 is governed by signal CTR. The first deflection angle at electrically controlled polarization grating 222 is, for example, +A degrees, and the second deflection angle at electrically controlled polarization grating 223 may be -A degrees (where A is any real number). That is, the first deflection angle and the second deflection angle may be positive and negative versions of the same number.

In the second time interval, due to the deflection angle at electrically controlled polarization grating 222 and the deflection angle at electrically controlled polarization grating 223 being identical but opposite in sign, the projected image beam TGB2 will have a projection direction from the image beam shifter 220 which is parallel to that of the projected image beam TGB1. However, due to the light deflection action generated by the electrically controlled polarization gratings 222 and 223 in the second time interval, the emission positions of the projected image beam TGB1 and the projected image beam TGB2 from the image beam shifter 220 will be different. TGB2 will have been deflected by a certain angle and then again by its inverse resulting in it having a parallel propagation direction to TGB1 but its point of exit from the image beam shifter 220 will have been shifted laterally with respect to that of TGB1. Projected image beams TGB 1 and TGB2 thus enter the light guiding component 230 at different positions. Due to the different entry points of projected image beams TGB1 and TGB2 into the light guiding component 230, it enables the projected image beam TGB1 to be transported to a first partition of the target zone TZ, and the projected image beam TGB2 to be transported to a second partition of the target zone TZ. The first partition is different from the second partition. Human eyes in the target zone TZ may thus observe different display pictures, at different locations, in the first and second time interval. If the time between the first display picture being displayed and the second display picture being displayed is short enough then human persistence of vision will allow both display pictures to be perceived as being displayed at the same time.

The electrically controlled polarization gratings 222 and 223 in the present embodiment are electrically controllable liquid crystal polarization gratings.

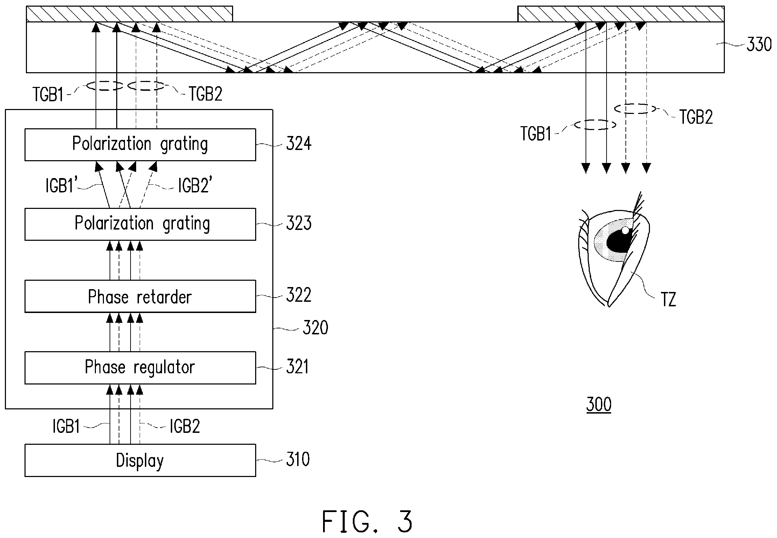

FIG. 3 is a schematic diagram of another implementation of a display device according to a further embodiment of the invention. The display device 300 includes a display 310, an image beam shifter 320, and a light guiding component 330. The image beam shifter 320 includes a phase regulator 321, a phase retarder 322, and polarization gratings 323 and 324. The phase regulator 321, the phase retarder 322, and the polarization gratings 323 and 324 are optically coupled with the display 310 and each other in the sequence shown.

In the present implementation, the display 310 generates image beams IGB1 and IGB2 in a first time interval and in a second time interval, respectively. In this embodiment, IGB1 and IGB2 are each linearly polarized light. The phase regulator 321 may be in an on state in the first time interval, and allows IGB1 to be transmitted to the phase retarder 322 without affecting the polarization state of the image beam IGB1. T phase regulator 321 may be in an off state in the second time interval, and allows image beam IGB2 to be transmitted to the phase retarder 322 but with an altered polarization state (for example, if the incoming light is P-linearly-polarized light, it might be altered to S-linearly-polarized light).

The phase retarder 322 converts the image beam IGB1 whose linear polarization state is unchanged into a light beam with a first rotation direction in the first time interval, and converts the image beam IGB2 whose linear polarization state is changed into a light beam with a second rotation direction in the second time interval, where the first rotation direction is opposite to the second rotation direction. The phase retarder 322 may be a quarter wave plate, configured to convert linearly polarized light into circularly polarized light.

Moreover, the polarization grating 323 receives the image beam IGB1 having the first rotation direction in the first time interval, deflects the image beam IGB1 (which is circularly polarized light) at a first deflection angle to generate a deflected image beam IGB1', and thus transmits the deflected image beam IGB1' to the polarization grating 324. The polarization grating 323 further receives the image beam IGB2 having the second rotation direction in the second time interval, deflects the image beam IGB2 (which is circularly polarized light) at a second deflection angle to generate a deflected image beam IGB2', and thus transmits the deflected image beam IGB2' to the polarization grating 324.

The polarization grating 324 receives the deflected image beam IGB1' in the first time interval, and deflects the deflected image beam IGB 1' at a third deflection angle to generate a projected image beam TGB1. The polarization grating 324 also receives the deflected image beam IGB2' in the second time interval, and deflects the deflected image beam IGB2' at a fourth deflection angle to generate a projected image beam TGB2. In the present embodiment, the first deflection angle and the third deflection angle may be mutually opposite numbers i.e. identical angles but opposite in sign, and the second deflection angle and the fourth deflection angle may be mutually opposite numbers i.e. identical angles but opposite in sign. The first and second deflection angles are not the same.

With the effect of the polarization gratings 323 and 324, positions where the projected image beams TGB1 and TGB2 are projected to the light guiding component 330 may be staggered. Therefore, the light guiding component 330 may transport the projected image beams TGB1 and TGB2 to different partitions of the target zone TZ.

The polarization gratings 323 and 324 in the present implementation are non-electrically-controllable polarization gratings, for example, non-electrically-controllable liquid crystal polarization gratings.

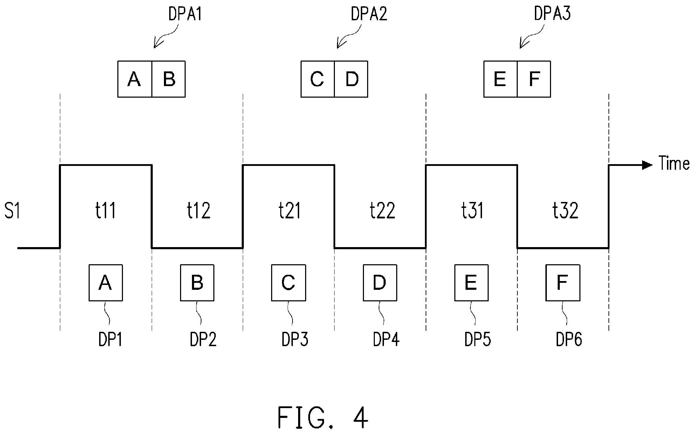

FIG. 4 is a schematic action diagram of a display device according to an embodiment of the invention. In FIG. 4, a state signal S1 indicates a working state of the image beam shifter. When the state signal S1 is at a high level, it indicates that the image beam shifter works at first time intervals t11, t21, and t31, and when the state signal S 1 is at a low level, it indicates that the image beam shifter works at second time intervals t12, t22, and t32.

The display provides an image beam corresponding to a display picture DP1 in the first time interval t11. The image beam shifter is controlled to project a projected image beam to a first position on or in the light guiding component according to the state signal S1. The display provides an image beam corresponding to a display picture DP2 in the following second time interval t12. The image beam shifter is controlled to project the projected image beam corresponding to display picture DP2 to a second position on or in the light guiding component according to the state signal S1. In this way, the display pictures DP1 and DP2 can be transmitted to different locations in the target zone, and if the transmission of each display picture occurs faster than the human persistence of vision threshold, then a viewer of the target area would see a combined display picture DPA1 in the target zone.

In addition, the display provides an image beam corresponding to a display picture DP3 in the first time interval t21. The image beam shifter is controlled to project a projected image beam corresponding to display picture DP3 to a first position on or in the light guiding component according to the state signal S1. The display provides an image beam corresponding to a display picture DP4 in the following second time interval t22. The image beam shifter is controlled to project the projected image beam corresponding to display picture DP4 to a second position on or in the light guiding component according to the state signal S1. In this way, the display pictures DP3 and DP4 can be transmitted to different locations in the target zone, and if the transmission of each display picture occurs faster than the human persistence of vision threshold, then a viewer of the target area would see a combined display picture DPA2 in the target zone.

Similarly, the display may provide an image beam corresponding to a display picture DP5 in the first time interval t31. The image beam shifter is controlled to project a projected image beam corresponding to display picture DP5 to a first position on or in the light guiding component according to the state signal S1. The display provides an image beam corresponding to a display picture DP6 in the following second time interval t32. The image beam shifter is controlled to project the projected image beam corresponding to display picture DP6 to a second position on or in the light guiding component according to the state signal S1. In this way, the display pictures DP5 and DP6 can be transmitted to different locations in the target zone, and if the transmission of each display picture occurs faster than the human persistence of vision threshold, then a viewer of the target area would see a combined display picture DPA3 in the target zone.

Therefore, by changing the projection position of the projected image beam in a time-staggered manner, a single image beam generating display can be used to produce a combined display picture in the target zone which is effectively larger than the size of the display (or the same size but effectively a higher resolution). A viewer of the target zone will perceive the output of the display thus viewed to be larger in area, or higher resolution, for a given size of the display than if that generating display was viewed directly. Thus the efficiency of the display device will be increased since it is possible to provide a larger or higher resolution output display to a viewer without increasing the size and weight of the display.

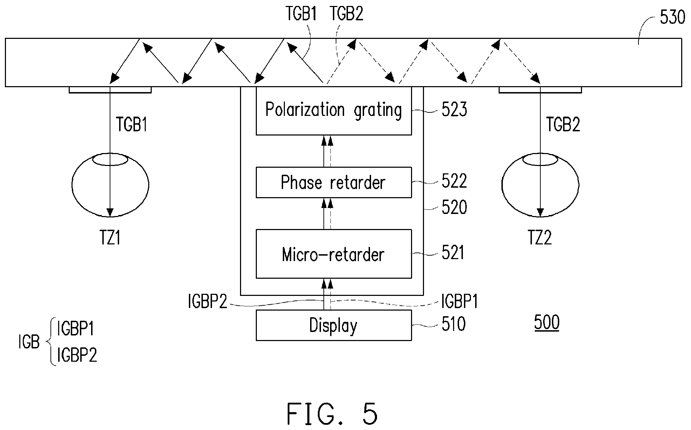

FIG. 5 is a schematic diagram of a display device according to another embodiment of the invention. The display device 500 includes a display 510, an image beam shifter 520, and a light guiding component 530. The image beam shifter 520 includes a micro-retarder 521, a phase retarder 522, and a polarization grating 523. The micro-retarder 521, the phase retarder 522, and the polarization grating 523 are optically coupled with one another in the sequence shown in Figure 5 and configured between the display 510 and the light guiding component 530.

In the present embodiment, the display 510 generates an image beam IGB, where the image beam IGB includes a first image beam IGBP1 and a second image beam IGBP2. The first image beam IGBP1 and the second image beam IGBP2 may correspond to a first display picture to be viewed by one eye of a user and a second display picture to be viewed by the other eye of a user, respectively, and are generated simultaneously by the display 510. For example, half of display 510 might display an image intended for one eye of the user, whilst the other half of display 510 might simultaneously display an image intended for the other eye of the user.

The micro-retarder 521 receives the first image beam IGBP1 and the second image beam IGBP2, and enables the first image beam IGBP1 and the second image beam IGBP2 to be in different (linear) polarization states respectively, for example, the first image beam IGBP1 might be in a P-polarization state, and the second image beam IGBP2 might be an S-polarization state. The phase retarder 522 may be a quarter wave plate, and is configured to allow the first image beam IGBP1 and the second image beam IGBP2 to be in different rotation directions depending on the incoming linear polarization state. For example, the phase retarder 522 enables the first image beam IGBP1 and the second image beam IGBP2 to be a left-handed rotation light beam and a right-handed rotation light beam respectively; or vice versa.

The polarization grating 523 is a non-electrically-controllable polarization grating, configured to generate a first projected image beam TGB1 and a second projected image beam TGB2 from the first image beam IGBP1 and the second image beam IGBP2, respectively, where each image beam has a different rotation direction. The polarization grating 523 generates the first and second projected image beams by deflecting the first image beam and second image beam, respectively. The angle by which the polarization grating 523 deflects each image beam depends on the circular-polarization direction of each beam. The first projected image beam TGB1 is a light beam with a first deflection angle relative to the polarization grating, the second projected image beam TGB2 is a light beam with a second deflection angle relative to the polarization grating, and the first deflection angle is different from the second deflection angle. For example, the first deflection angle and the second deflection angle may be mutually opposite numbers i.e. the same angle but positive and negative values thereof.

The light guiding component 530 receives the first projected image beam TGB 1 and the second projected image beam TGB2, and because the first projected image beam TGB1 and the second projected image beam TGB2 have opposite deflection angles, the first and second projected image beams are incident on or in the light guiding component at different locations and at opposite angles and thus the light guiding component 530 transports the first projected image beam TGB1 and the second projected image beam TGB2 to a first target zone TZ1 and a second target zone TZ2, respectively, wherein the second target zone TZ2 is different from the first target zone TZ1.

For example, the display device 500 may be a head-mounted display device, and the first target zone TZ1 and the second target zone TZ2 may correspond to a user's left eye and right eye respectively. The first projected image beam TGB1 and the second projected image beam TGB2 may correspond to the first display picture viewed by one eye of a user and the second display picture viewed by the other eye of a user respectively, and may present a three-dimensional display picture effectively when each display picture is viewed by the appropriate eye of the user.

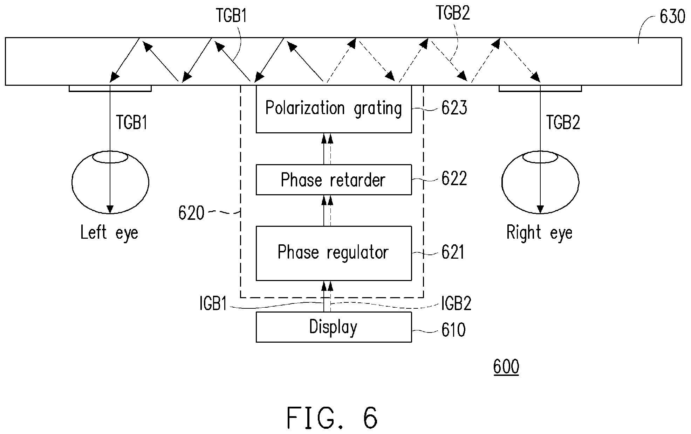

Referring to FIG. 6, FIG. 6 is a schematic diagram of a display device according to another embodiment of the disclosure. In FIG. 6, the display device 600 includes a display 610, an image beam shifter 620, and a light guiding component 630. The image beam shifter 620 includes a phase regulator 621, a phase retarder 622, and a polarization grating 623. The phase regulator 621, the phase retarder 622, and the polarization grating 623 are optically coupled with one another in the arrangement shown in Figure 6 and are configured between the display 610 and the light guiding component 630 in the sequence shown. The phase regulator 621 may be a twisted nematic liquid crystal cell, configured to change a polarization state of an output picture of the display 610. The display 610 and the phase regulator 621 are driven to simultaneously generate an S-polarized image beam IGB1 and a P-polarized image beam IGB2 respectively. For example, if display 610 generates image beams IGB1 and IGB2 both having P-polarized states, the phase regulator 621 will convert one of the image beams to S-polarized. The image beams IGB1 and IGB2 then pass through the phase retarder 622, which gives each image beam a circular polarization in dependence on its linear polarization state, and the polarization grating 623 which deflects each image beam based on its circular polarization state, to generate projected image beams TGB1 and TGB2 respectively. The light guiding component 630 then transmits the projected image beams TGB1 and TGB2 to the left eye and the right eye respectively, i.e. to two separate target zones, at the same time.

Based on the above, the display device of the disclosure is able to transmit image beams to different positions of a single target zone or to two different target zones, with time division or at the same time, through an image beam shifter, This allows a user to perceive a larger or higher resolution output display picture, or a three-dimensional output display picture, for a given size of the single display. The display efficiency of the display device can be improved without increasing the size of the display used to generate the images.

## Claims

1. A display device, comprising:
a display, generating an image beam;
an image beam shifter, receiving the image beam and generating a projected image beam therefrom; and
a light guiding component, receiving the projected image beam from said image beam shifter and operable to transport the projected image beam to a position of a target zone based on where the projected image beam is received on or in the light guiding component,
wherein the image beam shifter projects the projected image beam to different positions of the light guiding component over time.

2. The display device according to claim 1, wherein the display respectively generates a first image beam and a second image beam in a first time interval and in a second time interval in sequence; the image beam shifter projects a first projected image beam to a first position on or in the light guiding component and projects a second projected image beam to a second position on or in the light guiding component; wherein the first position is different from the second position.

3. The display device according to claim 2, wherein the first projected image beam and the second projected image beam correspond to a first display picture and a second display picture respectively.

4. The display device according to claim 2, wherein the light guiding component transports the first projected image to a first partition of the target zone, the light guiding component transports the second projected image to a second partition of the target zone; and the first partition is different from the second partition.

5. The display device according to claim 1, wherein the image beam shifter comprises:
a phase retarder, receiving the image beam;
a first electrically controlled polarization grating optically coupled with the phase retarder, wherein said first electrically controlled polarization grating is operable to allow the image beam to pass through it undeflected in a first time interval according to a control signal, and operable to deflect the image beam at a first deflection angle in a second time interval to generate a deflected image beam; and
a second electrically controlled polarization grating optically coupled with the first electrically controlled polarization grating, wherein said second electrically controlled polarization grating is operable to allow the image beam to pass through it undeflected in the first time interval according to the control signal to generate a first projected image beam, and operable to deflect the image beam at a second deflection angle in the second time interval to generate a second projected image beam;
wherein the first deflection angle and the second deflection angle are mutually opposite numbers.

6. The display device according to claim 1, wherein the image beam shifter comprises:
a phase regulator, receiving the image beam;
a phase retarder optically coupled with the phase regulator,;
a first polarization grating, optically coupled with the phase retarder, operable in a first time interval to deflect the image beam at a first deflection angle to generate a first deflected image beam, and operable in a second time interval to deflect the image beam at a second deflection angle to generate a second deflected image beam; and
a second polarization grating optically coupled with the first polarization grating, operable in the first time interval to deflect the first deflected image beam at a third deflection angle to generate a first projected image beam; and operable in the second time interval to deflect the second deflected image beam at a fourth deflection angle to generate a second projected image beam;
wherein the first deflection angle and the third deflection angle are mutually opposite numbers, and the second deflection angle and the fourth deflection angle are mutually opposite numbers and the first and second deflection angles are not the same.

7. A display device, comprising:
a display, generating an image beam;
an image beam shifter, receiving the image beam and generating a first projected image beam and a second projected image beam; and
a light guiding component, receiving the first projected image beam and the second projected image beam, and transporting the first projected image beam to a first target zone and transporting the second projected image beam to a second target zone; wherein the first target zone is different from the second target zone.

8. The display device according to claim 7, wherein the first projected image beam and the second projected image beam respectively correspond to a first display picture viewed by one eye of a user and a second display picture viewed by the other eye of a user.

9. The display device according to claim 8, wherein the the image beam comprises a first image beam and a second image beam and the image beam shifter comprises:
a micro-retarder, arranged to simultaneously receive the first and second image beams, and to enable the first image beam and second image beams to be in different polarization states;
a phase retarder arranged to simultaneously receive the first and second image beams from the micro-retarder, and to enable the first image beam and the second image beam to be in different rotation directions; and
a polarization grating optically coupled with the phase retarder, configured to simultaneously generate the first projected image beam and the second projected image beam.

10. The display device according to claim 7, wherein the image beam shifter comprises:
a phase regulator, arranged to receive the image beam, and to enable a first image beam and a second image beam in the image beam to be in different polarization states;
a phase retarder optically coupled with the phase regulator, configured to enable the first image beam and the second image beam to be in different rotation directions; and
a polarization grating optically coupled with the phase retarder, configured to generate the first projected image beam and the second projected image beam.

11. The display device according to claim 7, wherein the first projected image beam is a light beam with a first deflection angle, the second projected image beam is a light beam with a second deflection angle; and the first deflection angle is different from the second deflection angle.
